**Europäisches Patentamt**

**European Patent Office**

**Office européen des brevets**

(19)

(11) Veröffentlichungsnummer: **0 073 076**
**B1**

(12) # EUROPÄISCHE PATENTSCHRIFT

(45) Veröffentlichungstag der Patentschrift:
12.10.88

(21) Anmeldenummer: 82200976.7

(22) Anmeldetag: 26.07.82

(51) Int. Cl.⁴: **B 01 D 29/32,** B 01 D 29/38,
B 01 D 29/42

(54) **Verfahren zur kontinuierlichen Eindickung von Suspensionen.**

(30) Priorität: 04.08.81 CH 5015/81
05.10.81 CH 6375/81

(43) Veröffentlichungstag der Anmeldung:
02.03.83 Patentblatt 83/9

(45) Bekanntmachung des Hinweises auf die Patenterteilung:
12.10.88 Patentblatt 88/41

(84) Benannte Vertragsstaaten:
AT BE CH DE FR GB IT LI LU NL SE

(56) Entgegenhaltungen:
DE-A-1 536 782
DE-A-2 140 159
DE-C-91 903
FR-A-2 247 270
FR-A-2 251 349
FR-A-2 329 323
US-A-3 280 978
US-A-3 891 551

(73) Patentinhaber: DrM, Dr. Müller AG, Alte
Landstrasse 421, CH- 8708 Männedorf ZH (CH)

(72) Erfinder: Müller, Hans, Dr. Ing., im Allmendli, CH-
8703 Erlenbach (CH)

(74) Vertreter: Herrmann, Peter Johannes, Dr.
Patentanwalt, Lerchenbühlhöhe 5, CH- 6045
Meggen (CH)

LIBER, STOCKHOLM 1988

EP 0 073 076 B1

## Beschreibung

Die Erfindung betrifft ein Verfahren zur kontinuierlichen Eindickung von Suspensionen in einem Filterbehälter mit kerzenförmigen Filterelementen, die an einzelnen Sammelrohren zur Abführung des Filtrats hängend befestigt sind und die ohne Unterbrechung der Filtration einzeln abgestellt und mittels eines Gasdruckstoßes über ein Rückspülventil entgegengesetzt zur Filtrationsrichtung vom Feststoff befreit werden und wobei der Feststoff periodisch im konischen Boden des Filterbehälters abgezogen wird, sowie eine Vorrichtung zur Durchführung des Verfahrens.

Filtereindicker der Art sind bekannt. So beschreibt die DE-OS-2 741 639 einen Filterbehälter, in welchem Sammelrohre mit hintereinander angeordneten hängenden Filterelementen befestigt sind. Die Sammelrohre liegen nebeneinander auf Stützkörpern und können reihenweise aus dem Filterbehälter herausgenommen werden.

Aus der AT-PS-211 329 ist eine Anlage zur Rückspülung von reihenweise angeordneten Filterkerzen stehender Bauart bekannt. Die Strangleitungen, auf welchen die Filterelemente befestigt sind, sind beidseitig waagerecht durch die Behälterwand geführt. Die beidseitige Durchführung ist von der Herstellung her sehr aufwendig und damit kostspielig. Zusätzlich zu der grossen Anzahl der Kesselbohrungen ist jede Strangleitung mit zwei Absperrorganen versehen, was eine Vielzahl von Ventilen und Armaturen erforderlich macht.

Aufgabe der Erfindung ist es, ein verbessertes Verfahren zu schaffen, das die kontinuierliche Eindickung einer Suspension und rasche Reinigung der Filterelemente mittels Filtereindicker ermöglicht. Auch sollen die in der Betriebsphase Filtration befindlichen Filterelemente durch die Waschung und den Austrag von Feststoffen nicht beeinflusst werden.

Diese Aufgabe wird erfindungsgemäss nach Anspruch 1 gelöst und ist dadurch gekennzeichnet, über den Filterelementen ein von der zu filtrierenden Flüssigkeit abgetrennter Gasraum gebildet wird, und daß zur Filtration bei konstantem Druck das Flüssigkeitsniveau mittels eines Flüssigkeitsstandsreglers, welcher auf die Gasraumentlüftung und eine Druckgaszuführung zum Gasraum wirkt, konstant gehalten wird.

Die Erfindung soll anhand von Zeichnungen näher beschrieben werden.

Es zeigen:

Fig. 1 Schema des Filtereindickers,
Fig. 2 Variante des Filtereindickers mit Steigrohr,
Fig. 3 Variante des Unterteils eines Filtereindickers mit Waschvorrichtung.

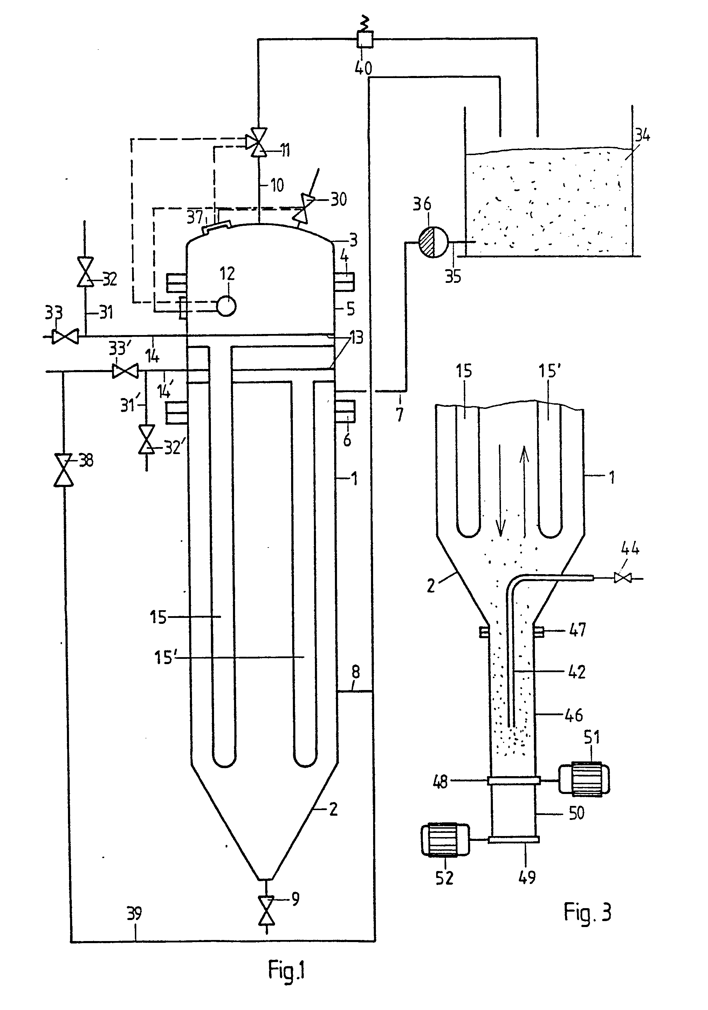

Gemäss Fig. 1 besteht der Filterbehälter 1 aus einem Zylinder mit einem konischen Boden 2 und einem Deckel 3. Der Deckel 3 ist durch ein Flanschenpaar 4 an einem zylindrischen Zwischenteil 5 befestigt, welcher seinerseits mit dem Filterbehälter 1 durch ein Flanschenpaar 6 verbunden ist. Der Filterbehälter 1 weist in seinem zylindrischen Teil eine Zulaufleitung 7 für die Trübe und eine Ablaufleitung 8 für den Rücklauf auf. Ein Stutzen 9 dient zum Schlammaustrag. Im domartig gewölbten Deckel 3 befindet sich in einer Gasleitung 10 ein Regelventil 11 und ein Flüssigkeitsstandregler 12. Auf einem Kreisring 13 sind Sammelrohre mit Leitungen 14 und 14′ befestigt. Zur einfacheren Darstellung werden nur zwei Leitungen gezeigt. Die Anzahl der Sammelrohre kann entsprechend der Kesselgrösse und der erforderlichen Filterfläche gewählt werden. An den Sammelrohren sind Filterelemente 15 und 15′ befestigt. Jede der Leitungen 14 und 14′ haben eine Gasrückspülleitung 31 und 31′, die mit Ventilen 32 und 32′ versehen sind. Die Ventile 33 und 33′ dienen zum Absperren der Leitungen 14 bzw. 14′. Ein Tank 34 dient zur Aufnahme der Trübe und ist über eine Leitung 35 mit einer Pumpe 36 verbunden, die auf die Leitung 7 führt.

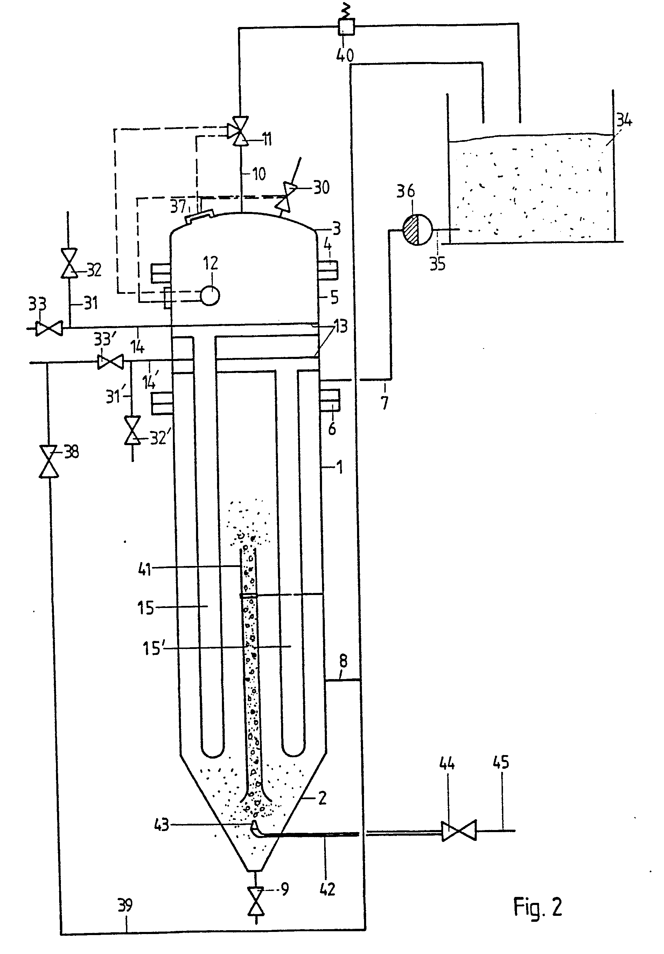

In der Variante gemäss Fig. 2 ist zusätzlich ein Steigrohr 41, etwa in der Mitte des Bodens 2 beginnend, zwischen den Filterelementen 15 in bekannter Weise befestigt. Zum Steigrohr 41 führt eine Druckleitung 42, welche an ihrem Ende mit einer Düse 43 versehen sein kann. Die Druckleitung 42 ist mit einem Ventil 44 versehen, welches über eine Zufuhrleitung mit einer nicht gezeigten Druckgas- oder Druckflüssigkeitsquelle verbunden ist.

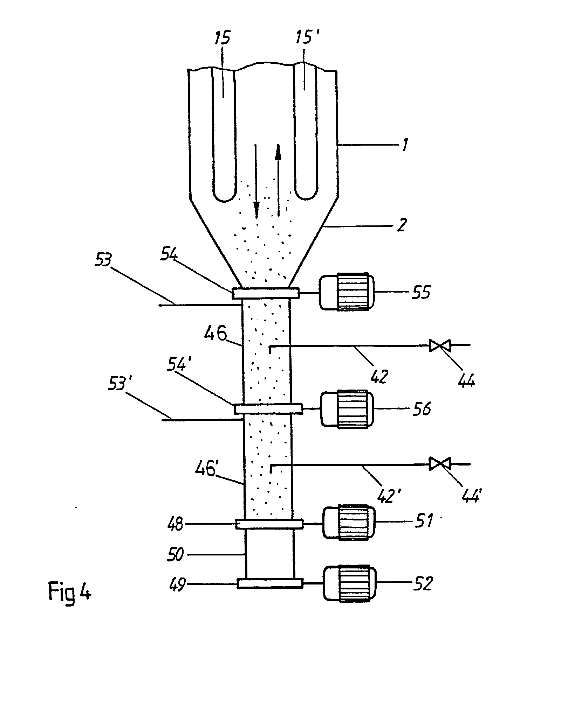

In Fig. 3 ist der Boden 2 mittels eines Rohrteiles 46 über einen Flansch 47 nach unten verlängert. Die Druckleitung 42 führt nach unten in einen Rohrteil 46 hinein. Zwischen einem Schieber 48 und einem Schieber 49 befindet sich eine Schleuse 50. Der Schieber 48 wird mittels eines Elektromotors 51, und der Schieber 49 mittels eines Elektromotors 52 betätigt.

Gemäss Fig. 4 können zwischen die Schleuse 50 und dem Rohrteil 46 weitere Rohrteile 46′ installiert sein. Die Rohrteile 46, 46′ können mittels Schieber 54, 54′ und 48 verschlossen werden. Die Schieber werden mittels Elektromotoren 55 und 56 betätigt. In jedes Rohrteil 46 führt eine Druckleitung 42 und 42′ sowie eine Entlüftungsleitung 53 bzw. 53′.

Im Betrieb wird über die Zulaufleitung 7 Trübe in den Filterbehälter 1 eingeführt. Die Feststoffe lagern sich auf den Geweben der Filterelemente 15 ab, wo sie einen Feststoffkuchen bilden. Die vom Feststoff befreite Flüssigkeit verlässt über die Sammelrohre und deren Leitungen 14 als Filtrat den Filterbehälter 1. Der obere Teil des Filters enthält eine Luftreserve von ca. 1/6 bis 1/4 des Totalvolumens des Filterbehälters 1. Das Flüssigkeitsniveau wird über den Flüssigkeitsstandregler 12 wie folgt konstant gehalten:

Sinkt das Flüssigkeitsniveau im Filterbehälter 1, beispielsweise beim Rückspülen mit Luft ab, so öffnet sich das Regelventil 11, bis das gewünschte Niveau wieder erreicht ist. Steigt das Flüssigkeitsniveau im Filterbehälter 1, so öffnet ein Ventil 30, welches über den Flüssigkeitsstandregler 12 geregelt wird. Steigt der Gasdruck im Decke 3 des Filterbehälters 1 beispielsweise über 2 bar, so öffnet das Regelventil 11 ebenfalls und bläst Gas bis auf den gewünschten Sollwert ab.

Während der eigentlichen Filtration wird Trübe aus dem Tank 34 mittels einer Pumpe 36 über die Zulaufleitung 7 in den Filterbehälter 1 gefördert. Es wird bei konstantem Druck filtriert. Die Ventile 33 und 33' sind geöffnet; die Ventile 32 und 32' geschlossen. Im Raum über den Filterelementen 15 herrscht ein Gasdruck von 2 bar. Zur Reinigung beispielsweise des Segmentes, welches mit der Leitung 14 verbunden ist, wird das Ventil 33 automatisch geschlossen und das Ventil 32, welches mit einer Druckquelle von beispielsweise 3 bar verbunden ist, geöffnet, ohne die Filtration der anderen Segmente zu unterbrechen. Druckluft oder ein anderes Druckgas dringt durch die Leitung 14 ein und spült die Filterelemente 15 des ganzen Segmentes frei. Der Flüssigkeitsstandregler 12 öffnet, um die einströmende Luft abzublasen. Über einen Drucktransmitter 37 und das Ventil 30 wird der Druck wieder auf den Filtrationsdruck (2 bar) eingestellt. Nach beendeter Reinigung schliesst das Ventil 32 wieder und das Ventil 33 öffnet. Auf analoge Weise kann die nächste Reihe von Filterelementen gereinigt werden. Je nach Bedarf werden die einzelnen Segmente hintereinander abgereinigt. Bei Gefahr von Trüblauf kann das Filtrat während kurzer Zeit durch Öffnen eines Ventils 38, welches in einer Rücklaufleitung 39 angebracht ist, in den Tank 34 zurückgeführt werden. Die Anschwemmung mit Filterhilfsmitteln kann auch über die Zulaufleitung 7 erfolgen.

Eine vorzugsweise Ausführung besteht gemäss Fig. 2 darin, dass eingedickter Rückstand aus dem Konus des Bodens 2 des Filterbehälters 1 mittels einer Mammutpumpe, bestehend aus dem Steigrohr 41 und einem über die Druckleitung 42 zugeführten Gas, auf die Filterelemente 15 aufgetragen wird. Als Druckmedium kommt ein komprimiertes Gas, beispielsweise Luft oder eine Flüssigkeit, beispielsweise Suspension infrage.

Nach Fig. 3 kann der eingedickte Rückstand aber auch im Rohrteil 46 über die Leitung 42 mit Druckgas oder Spülflüssigkeit behandelt werden. Dabei wird der Rückstand aufgewirbelt und auf diese Weise gewaschen. Dann kann er sich nach Öffnen des Schiebers 48 bis auf den Schieber 49 absetzen. Durch Schliessen des Schiebers 48 und Öffnen von Schieber 49 kann der gereinigte Rückstand, der sich in der Schleuse 50 befand, entnommen werden.

Nach Fig. 4 sedimentiert bei geöffnetem Schieber 54 und geschlossenem Schieber 54' der von den Filterelementen 15, 15' abgeworfene Feststoff im Rohrteil 46. Zur Auswaschung des Sediments wird Waschflüssigkeit über die Leitung 42 zugeführt und so die Feststoffe aufgewirbelt. Nach dem Absetzen wird der Schieber 54 geschlossen und der Inhalt aus dem Rohrteil 46 durch Öffnen des Schiebers 54' in das Rohrteil 46' bei geöffneter Entlüftung der Leitung 53 gefördert. Hier erfolgt eine weitere Waschung über Leitung 42', wobei die Waschflüssigkeit nach oben in das Rohrteil 46 verdrängt wird. Durch Öffnen des Schiebers 48 wird der Feststoff in die Schleuse 50 gefördert und von dort wie beschrieben ausgetragen. Nun kann der Zyklus wiederholt werden, wobei die zugeführte Waschflüssigkeit jeweils nach oben verdrängt wird und über die Filterelemente 15, 15' das System verlässt.

Der ganze Betriebsablauf wird über ein Steuergerät geregelt, wobei mehrere Varianten vorgesehen werden können:
Steuerung über die Zeit nach Erfahrung;
Steuerung über die Filtrationsgeschwindigkeit, d. h. bei zu kleinem Durchfluss tritt automatisch die Rückspülung in Funktion; Steuerung über den Rücklauf mittels Trübungsmessung; Steuerung über den Ablauf des Konzentrates und Timer oder Schlammkonzentrationsmessung;
Steuerung über ein Überdruckventil 40, das dafür sorgt, dass immer ein Mindestdruck im Kopf des Filterbehälters 1 herrscht; Steuerung der Schieber 48 und 49 über und unter der Schleuse 50 im vorgegebenen Takt.

Durch den raschen Zyklus der Abreinigung und wieder Inbetriebsetzen der Filterelemente ist in vielen Fällen kein Filterhilfsmittel erforderlich. So hat sich das erfindungsgemässe Verfahren insbesondere zur Reinigung von Sole vor und nach der Elektrolyse als geeignet erwiesen. Aber auch die Auswaschung von Natronlauge aus Rotschlamm, die Filtration der Viskose aus den Spinnbädern, die Kondensatreinigung, Filtration von PVC-Abwasser und die Filtration von Dünnsäften der Zuckerindustrie ergeben ausgezeichnete Resultate.

**Patentansprüche**

1. Verfahren zur kontinuierlichen Eindickung von Suspensionen in einem Filterbehälter (1) mit kerzenförmigen Filterelementen (15, 15'), die an einzelnen Sammelrohren zur Abführung des Filtrats hängend befestigt sind und die ohne Unterbrechung der Filtration einzeln abgestellt und mittels eines Gasdruckstoßes über ein Rückspülventil (32, 32') entgegengesetzt zur Filtrationsrichtung vom Feststoff befreit werden und wobei der Feststoff periodisch im konischen Boden (2) des Filterbehälters (1) abgezogen wird, dadurch gekennzeichnet,

daß über den Filterelementen (15, 15') ein von der zu filtrierenden Flüssigkeit abgetrennter Gasraum gebildet wird,

und daß zur Filtration bei konstantem Druck das Flüssigkeitsniveau mittels eines Flüssigkeitsstandsreglers (12), welcher auf die Gasraumentlüftung und eine Druckgaszuführung zum Gasraum wirkt, konstant gehalten wird.

2. Verfahren nach den Anspruch 1, dadurch gekennzeichnet dass die Entlüftung über ein Überdruckventil (40) erfolgt.

3. Verfahren nach den Ansprüchen 1 und 2, dadurch gekennzeichnet, dass der Gasraum über ein Ventil (30) mit Druckgas versorgt wird.

4. Verfahren nach den Ansprüchen 1 bis 3, dadurch gekennzeichnet, dass das eingedickte Gut mittels eines gesteuerten Ventils im Boden (2) des Filters periodisch abgeleitet wird.

5. Verfahren nach Anspruch 1, dadurch gekennzeichnet, dass vor Beginn eines Filtrationszyklus wenigstens ein Teil des eingedickten Rückstandes zur Anschwemmung als Filterhilfsmittel zurückgeführt wird.

6. Verfahren nach Anspruch 5, dadurch gekennzeichnet, dass der eingedickte Rückstand mit Hilfe einer Pumpe (36) in den Trübraum zurückgeführt und erneut als Filterhilfsmittel auf die Filterelemente (15, 15') angeschwemmt wird.

7. Verfahren nach den Ansprüchen 5 und 6, dadurch gekennzeichnet, dass der eingedickte Rückstand mit Hilfe einer Mammutpumpe, in den Trübraum zurückgeführt und erneut als Filterhilfsmittel auf die Filterelemente (15, 15') angeschwemmt wird.

8. Verfahren nach Anspruch 7, dadurch gekennzeichnet, dass die Rückführung mittels Gastreibstrahl erfolgt.

9. Verfahren nach Anspruch 8 dadurch gekennzeichnet, dass die Rückführung mittels Flüssigkeitsstrahl erfolgt.

10. Verfahren nach Anspruch 9, dadurch gekennzeichnet, dass der eingedickte Rückstand mit Hilfe eines über eine Druckleitung (42) zugeführten Spülmediums in einen Rohrteil (46) unterhalb des Bodens (2) aufgewirbelt und gereinigt wird.

11. Verfahren nach Anspruch 10, dadurch gekennzeichnet, dass der gereinigte und abgesetzte Rückstand über wenigstens eine Schleuse (50) ausgetragen wird.

12. Verfahren nach Anspruch 11, dadurch gekennzeichnet, dass die Rohrteile (46, 46') abwechselnd mit Waschflüssigkeit über die Druckleitungen (42'') oder (42') gefüllt werden, wobei das auszuwaschende Konzentrat aufgewirbelt und nach der Sedimentation der Feststoff von oben nach unten gefördert und die Waschflüssigkeit von unten nach oben verdrängt wird.

13. Vorrichtung zur kontinuierlichen Eindickung von Suspensionen mit einem Filterbehälter (1), in den kerzenförmige Filterelemente (15, 15') an einzelnen Sammelrohren mit Leitungen (14, 14') zur Filtratabführung hängend befestigt sind, wobei jeder Leitung (14, 14') eine Gasrückspülleitung (31, 31') zugeordnet ist, und mit einem Stutzen zum Austrag des Feststoffes im konischen Boden (2) des Filterbehälters (1), dadurch gekennzeichnet,

daß zur Aufrechterhaltung eines konstanten Flüssigkeitsniveaus über den Filterelementen (15, 15') ein Flüssigkeitsstandsregler (12), der mit einem Ventil (11) in einer Entlüftungsleitung (10) und einem Druckgasventil (30) regelnd verbunden ist, vorgesehen ist, und daß im Austragsstutzen wenigstens eine Schleuse (50) vorgesehen ist.

## Claims

1. Method for continuously thickening suspensions within a filter container (1) having candle-shaped filter elements (15, 15'), which are connected hanging to separate collectors for the removal of filtrates and which may be individually taken out of service without disrupting the filtration and purged of solids by means of a surge of pressurised gas from a backflush valve (32, 32') in a direction opposite to that of the filtration, and whereby the solids in the tapered bottom (2) of the filter container (1) may be periodically removed, characterised in that a gas space that is separated from the fluid to be filtered is formed above the filter elements (15, 15') and that on filtration at constant pressure the level of the fluid is kept constant by means of a fluid-level controller (12) which acts on the ventilation of the gas-space and a pressurised gas supply to the gas space.

2. Method according to claim 1, characterised in that the ventilation is effected by a pressure-relief valve (40).

3. Method according to claims 1 and 2, characterised in that the gas space is supplied with pressurised gas by a valve (30).

4. Method according to claims 1 to 3, characterised in that the thickened useful material in the bottom (2) of the filter is periodically removed by means of a controlled valve.

5. Method according to claim 1, characterised in that at least a part of the thickened residue on silting is returned as a filtering aid before the start of a filtration cycle.

6. Method according to claim 5, characterised in that the thickened residue is returned with the aid of a pump (36) into the turbid space and is deposited again as a filtering aid to the filter elements (15, 15').

7. Method according to claims 5 and 6, characterised in that the thickened residue is returned with the aid of a mammoth pump into the turbid space and deposited again as a filtering aid to the filter elements (15, 15').

8. Method according to claim 7, characterised in that the return flow is effected by means of a driving jet of gas.

9. Method according to claim 8, characterised in that the return flow is effected by means of a jet of fluid.

10. Method according to claim 9, characterised in that the thickened residue is fluidised and purged with the aid of a flushing medium supplied by a pressure line (42) in a pipe section (46) below the bottom (2).

11. Method according to claim 10, characterised in that the purged and deposited residue is discharged by at least one sluice (50).

12. Method according to claim 11, characterised in that the pipe sections (46, 46') are alternately filled with washing fluid from the pressure lines (42") or (42'), so that the concentrate which is to be washed out is fluidised up and after sedimentation the solids are passed from top to bottom and the washing fluid is forced from bottom to top.

13. Apparatus for continuously thickening suspensions, having a filter container (1) in which candle-shaped filter elements (15, 15') are installed hanging on separate collectors having lines (14, 14') for filtrate removal, whereby each line (14, 14') is associated with a gas backflush line (31, 31'), and having a connection for discharging the solids in the tapered bottom (2) of the filter container (1), characterised in that for maintaining a constant level of fluid above the filter elements (15, 15') there is provided a fluid-level controller (12) which is controllably connected to a valve (11) in a vent line (10) and a pressurised gas valve (30), and that in the discharge connection there is provided at least one sluice (50).

## Revendications

1. Procédé pour l'épaississement en continu de suspensions dans un récipient de filtration (1) présentant des éléments filtrants (15, 15') en forme de bougies, qui sont fixés en étant suspendus à des tuyaux collecteurs séparés pour l'évacuation du filtrat, et qui sont mis hors service individuellement sans interruption de la filtration et débarrassés de la matière solide à l'aide d'une poussée de pression de gaz, par l'intermédiaire d'une soupape de lavage à contre-courant (32, 32'), opposée au sens de la filtration, et où on soutire périodiquement la matière solide dans le fond conique (2) du récipient de filtration (1), caractérisé par le fait qu'au-dessus des éléments filtrants (15, 15'), on forme une chambre de gaz séparée du liquide à filtrer, et que, pour la filtration à pression constante, on maintient constant le niveau de liquide à l'aide d'un régulateur de niveau de liquide (12), lequel agit sur la mise à l'atmosphère de la chambre de gaz et sur une amenée de gaz sous pression à la chambre de gaz.

2. Procédé selon la revendication 1, caractérisé par le fait que la mise à l'atmosphère a lieu par l'intermédiaire d'une soupape de surpression (40).

3. Procédé selon les revendications 1 et 2, caractérisé par le fait qu'on alimente la chambre de gaz en gaz comprimé par l'intermédiaire d'une soupape (30).

4. Procédé selon les revendications 1 à 3, caractérisé par le fait qu'on évacue périodiquement la matière épaissie au moyen d'une soupape commandée dans le fond (2) du filtre.

5. Procédé selon la revendication 1, caractérisé par le fait qu'avant le début d'un cycle de filtration, on recycle au moins une partie du résidu épaissi, en tant qu'auxiliaire de filtration, en vue de l'entraînement des boues.

6. Procédé selon la revendication 5, caractérisé par le fait qu'on recycle le résidu épaissi à l'aide d'une pompe (36) dans la chambre de la suspension et qu'on l'entraîne à nouveau en tant qu'auxiliaire de filtration sur les éléments filtrants (15, 15').

7. Procédé selon les revendications 5 et 6, caractérisé par le fait qu'on recycle le résidu épaissi à l'aide d'une pompe mammouth dans la chambre de la suspension et qu'on l'entraîne à nouveau en tant qu'auxiliaire de filtration sur les éléments filtrants (15, 15').

8. Procédé selon la revendication 7, caractérisé par le fait que le recyclage a lieu au moyen d'un jet de propulsion de gaz.

9. Procédé selon la revendication 8, caractérisé par le fait que le recyclage a lieu au moyen d'un jet de liquide.

10. Procédé selon la revendication 9, caractérisé par le fait qu'on soulève en tourbillons et qu'on nettoie le résidu épaissi à l'aide d'un milieu de lavage amené par l'intermédiaire d'une conduite sous pression (42) dans une partie tubulaire (46) au-dessous du fond (2).

11. Procédé selon la revendication 10, caractérisé par le fait qu'on évacue le résidu purifié et déposé, par l'intermédiaire d'au moins un canal de transfert (50).

12. Procédé selon la revendication 11, caractérisé par le fait qu'on remplit les parties tubulaires (46, 46') tour à tour par un liquide de lavage par l'intermédiaire des conduites sous pression (42") ou (42'), le concentré à retirer par lavage étant soulevé en tourbillons et, après le dépôt, la matière solide étant transportée de haut en bas et le liquide de lavage étant déplacé de bas en haut.

13. Dispositif pour l'épaississement en continu de suspensions comportant un récipient de filtration (1), dans lequel des éléments filtrants (15, 15') en forme de bougies sont fixés en étant suspendus à des tuyaux collecteurs séparés, présentant des conduites (14, 14') pour l'évacuation du filtrat, une conduite de lavage à contre-courant par gaz (31, 31') étant disposée sur chaque conduite (14, 14') et comportant une tubulure pour l'évacuation de la matière solide dans le fond conique (2) du récipient de filtration (1), caractérisé par le fait que, pour le maintien d'un niveau de liquide constant au-dessus des éléments filtrants (15, 15'), est prévu un régulateur de niveau de liquide (12), qui est relié de façon régulée avec une soupape (11) dans une conduite de mise à l'atmosphère (10) et une soupape de gaz sous pression (30), et que, dans la tubulure d'évacuation, est prévu au moins un canal de transfert (50).

# 0 073 076

Fig.1

Fig. 3

Fig. 2

Fig 4